# EUROPEAN PATENT APPLICATION

(11) **EP 4 492 782 A1**
(43) Date of publication of application: **15.01.2025**
(21) Application number: 24188238.0
(22) Date of filing: 12.07.2024
(51) Int. Cl.: H04N 19/117, G06N 3/02, G06T 5/70, H04N 19/172, H04N 19/85

(54) **SYSTEMS AND METHODS FOR VIDEO PROCESSING**

(30) Priority: 14.07.2023 US 202363513819 P
(71) Applicant: Comcast Cable Communications LLC, Philadelphia, Pennsylvania 19103 (US)
(72) Inventor: GROIS, Dan, Pennsylvania, 19103 (US); GILADI, Alexander, Pennsylvania, 19103 (US); MAO, Weidong, Pennsylvania, 19103 (US)
(74) Representative: V.O.

(57) **Abstract**

Methods and systems for masking artifacts are disclosed. A frame of a video content item may be received. Based on removing at least a portion of high-frequency spatial information from the frame, the frame may be encoded. Based on at least one of data associated with the video content item or network condition data, data indicative of one or more film grain parameters may be determined. The encoded frame and the data indicative of the one or more film grain parameters may be sent to a device. The device may be configured to decode the encoded frame, generate a film grain based on the one or more film grain parameters, and modify the decoded frame based on the film grain.

## Description

### CROSS-REFERENCE TO RELATED APPLICATIONS

This application claims the benefit of US provisional Application Number 63/513,819, filed July 14, 2023, which is incorporated by reference in its entirety.

### BACKGROUND

Video compression techniques may be used to compress video content in an efficient manner, thereby enabling high-quality video content to be provided to customers while minimizing the bandwidth required to transmit that video content. As video quality continues to improve, the computational complexities for processing the video content and the bitrate requirements for transmitting the video content may also increase. There is currently a need to reduce bit-rate requirements, particularly for high-resolution video content, without decreasing perceived video content quality and while keeping computational complexity at a reasonable level.

### SUMMARY

Methods and systems for video processing are disclosed. Video content may be pre-filtered (e.g., smoothed) to remove the noise and/or high-frequency spatial information. Pre-filtering the video content may improve the compression gain associated with encoding the video content. However, essential information (e.g., fine details of objects, edges, corners, etc.) may be removed from the video content along with the noise and/or high-frequency spatial information during the pre-filtering process. The removal of this essential information may cause coding artifacts (e.g., noticeable distortions) in the video content. The artifacts may negatively impact the presentation quality of the video content for a viewer of the video content. To remedy the negative impact that the pre-filtering process may have on the presentation quality of the video content to the viewer, a film grain (e.g., a digital representation of optical texture, film grain noise, digital film grain, granularity) may be used to mask (e.g., disguise, conceal, hide, etc.) artifacts in the video content, such as those artifacts caused by the pre-filtering process.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

Additional advantages will be set forth in part in the description which follows or may be learned by practice. It is to be understood that both the foregoing general description and the following detailed description are exemplary and explanatory only and are not restrictive.

### BRIEF DESCRIPTION OF THE DRAWINGS

The accompanying drawings, which are incorporated in and constitute a part of this specification, illustrate embodiments and together with the description, serve to explain the principles of the methods and systems.
Figure 1 is an example system.
Figure 2 is an example pre-processing unit.
Figure 3 is an example method.
Figure 4 is an example method.
Figure 5 is an example method.
Figure 6 is an example computing device.

### DETAILED DESCRIPTION OF ILLUSTRATIVE EMBODIMENTS

Methods and systems for masking artifacts are disclosed. The first version of the H.265/MPEG-HEVC (High Efficiency Video Coding) standard facilitated the compression of high-resolution (e.g., 3840x2160 (4K) resolution) video content in terms of luma samples, in a more efficient manner than its predecessor H.264/MPEG-AVC (Advanced Video Coding). As a result, the H.265/MPEG-HEVC standard provided a good trade-off between the perceived (e.g., by a viewer) visual quality of video content and its corresponding transmission bitrate.

Following the approval of the H.265/MPEG-HEVC standard, the Versatile Video Coding (VVC) standard was developed. VVC is more comprehensive than H.265/MPEG-HEVC and provides a greater quantity of coding tools than H.265/MPEG-HEVC. Thus, VVS provides a more than 40% coding gain as compared to HEVC for encoding UltraHD video content. However, the average computational complexity of VVC is much higher than that of HEVC. For example, for the popular Random Access (RA) encoding configuration, the computational complexity of VVC, in terms of the encoding time, is about 10 times higher than that of HEVC for encoding the Joint Video Exploration Team (JVET) common test condition (CTC) video sequences. The VVC standard was developed with ultra-high-definition (UltraHD) and high frame rate video requirements in mind (e.g., 3840x2160 (4K), 7680x4320 (8K) and 60Hz-120Hz, respectively).

However, despite the coding efficiency improvements provided by VVC, the compression of UltraHD video content (and especially, High Dynamic Range (HDR) video content) still remains challenging due to users' demand for the high visual quality. Transmitting video content of high visual quality requires an allocation of more bits and an increase in video coding depth. Transmission bandwidth may be limited within existing network infrastructures, especially within wireless or cellular networks. Thus, in order to comply with the required bandwidth limits (e.g., 6 Megabits (Mb) to 14 Mb per second), video content, such as UltraHD video content, may be compressed. However, this compressed video content may comprise visually perceivable coding artifacts (e.g., noticeable distortions). Further, the encoding of video content, such as UltraHD video content, may consume significant computational resources in an attempt to preserve fine details within the video content. Accordingly, techniques for improving the perceived visual quality of compressed video content without increasing transmission bitrate are needed.

One technique for improving perceived visual quality comprises pre-processing video content prior to encoding the video content. Pre-processing the video content may reduce less noticeable details (e.g., the movement of tree leaves, the movement of grass, etc.) in the video content. Reducing the less noticeable details in the video content may enable the encoder to allocate more bits to important or noticeable regions of the video content during compression of the video content while still ensuring that the output (e.g., compressed video signal) remains within the required network bandwidth limitations. However, the existing state-of-the-art pre-processing techniques are designed for pre-processing low-resolution (e.g., standard-dynamic-range (SDR)) video content. The existing state-of-the-art pre-processing techniques are not suitable for pre-processing high-resolution video content. Accordingly, there is still a strong need to reduce transmission bitrate, especially for the high-resolution video content, without decreasing the perceived video content quality and while also ensuring that computational complexity is kept at a reasonable level.

Described here are techniques for reducing transmission bitrate, especially for high-resolution video content, without decreasing the perceived video content quality and while also ensuring that computational complexity is kept at a reasonable level. Noise and/or high frequency spatial information may be difficult to compress due to its inherent lack of correlation. The difficulty in compressing the noise and/or high frequency spatial information may cause a reduction in the efficiency of the video compression. To mitigate such inefficiency, the video content may be pre-filtered. Pre-filtering the video content may comprise performing a set of operations for removing noise and/or high-frequency spatial information from the video content. For example, removing the noise and/or high-frequency spatial information from the video content may comprise smoothing the video content by applying a Gaussian filter to the video content. Pre-filtering the video content may improve the video compression gain.

However, essential information (e.g., fine details of objects, edges, corners, etc.) may be removed from the video content along with the noise and/or high-frequency spatial information during the pre-filtering (e.g., smoothing) process. The removal of this essential information may cause coding artifacts (e.g., noticeable distortions) in the video content. The artifacts may negatively impact the presentation quality of the video content.

To remedy the negative impact that the pre-filtering process may have on the presentation quality of the video content, film grain (e.g., film grain noise, digital film grain, granularity) may be used to mask (e.g., disguise, conceal, hide, etc.) the artifacts. In analog video production, film grain may comprise a random optical texture of processed photographic film. Film grain may be generated by exposing and developing silver-halide crystals, which are dispersed within the photographic emulsion. Thus, in analog video production, film grain may be naturally formed during the film exposure and development process due to spatiotemporal variations in optical density of the processed film. The film grain that is naturally formed during in analog video production may be recreated for use in digital content. The techniques described herein utilize a film grain modeling unit that may adaptively determine various film grain modeling parameters, such as film grain intensity, film grain density, film grain size, and/or film grain color. The film grain modeling parameters may be used to generate a digital film grain. The digital film grain may be added to decoded video content item to efficiently mask artifacts in the video content item, including the artifacts caused by the pre-processing (e.g., smoothing) process, therefore improving the perceived visual quality of the video content.

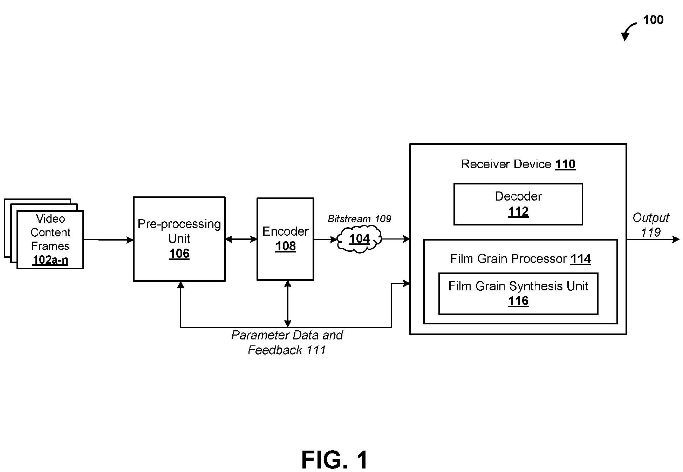

FIG. 1 is an example system 100 for masking artifacts. The system 100 may comprise a network 104, a pre-processing unit 106, an encoder 108, and a receiver device 110. The network 104 may be associated with a content provider. The content provider may be configured to send (e.g., distribute) one or more video content items to the receiver device 110 for output (e.g., playback, display) by the receiver device 110. The content provider may comprise a cable television provider, a streaming service, a multichannel video programming distributor, a multiple system operator, or any other type of service provider.

The video content item(s) may comprise high-resolution video content. The video content item(s) may comprise one or more of linear content, non-linear content, video content, audio content, multi-media content, recorded content, stored content, or any other form of content a user may wish to consume. Video content may refer generally to any video content produced for viewer consumption regardless of the type, format, genre, or delivery method. Video content may comprise video content produced for broadcast via over-the-air radio, cable, satellite, or the internet. Video content may comprise digital video content produced for digital video streaming or video-on-demand. Video content may comprise a movie, a television show or program, an episodic or serial television series, or a documentary series, such as a nature documentary series. The video content item may comprise any other type of content a user may wish to consume.

The pre-processing unit 106 may be configured to receive one or more frames of a video content item (e.g., video content frames 102a-n). The pre-processing unit 106 may be configured to pre-process the video content frames 102a-n. The pre-processed video content frames 102a-n may be encoded by the encoder 108.

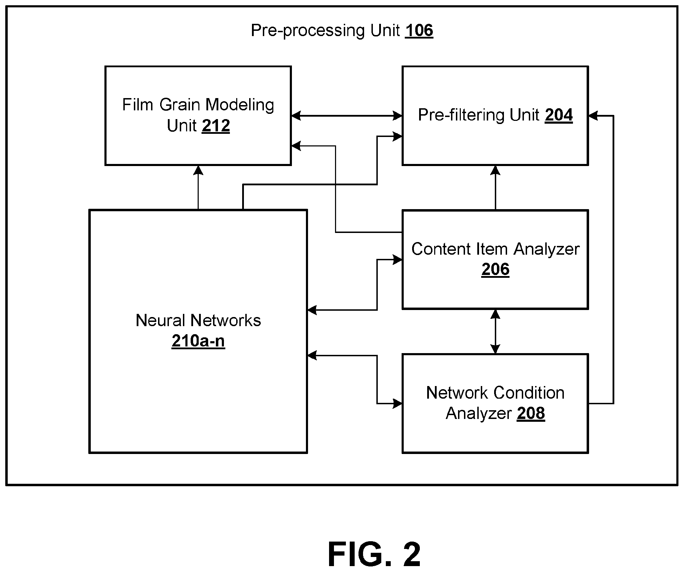

FIG. 2 shows the pre-processing unit 106 in more detail. Referring to FIG. 2, the pre-processing unit 106 comprises a pre-filtering unit 204, a content item analyzer 206, a network condition analyzer 208, one or more neural networks (e.g., processing units, neural network models, etc.) 210a-n, and a film grain modeling unit 212. The pre-filtering unit 204 may be configured to perform a smoothing (e.g., blurring) operation (e.g., Gaussian smoothing) of each input video content frame 102a-n. Performing the smoothing operation may comprise removing at least a portion of high frequency spatial information from each input video content frame 102a-n. The high frequency spatial information may comprise one or more regions of each input video content frame 102a-n that change rapidly from one color to another. For example, the high frequency spatial information may comprise one or more regions of each input video content frame 102a-n that contain sharp edges. The high frequency spatial information may comprise perceptually unnoticeable details (e.g., the movement of tree leaves, the movement of grass, and/or the like). Removing the high frequency spatial information from each input video content frame 102a-n may improve compression efficiency. The parameters of the pre-filtering unit 204 may be dynamically adjusted based on data received from the content item analyzer 206 and/or from the network condition analyzer 208. The pre-filtering unit 204 may be configured to send the pre-filtered (e.g., smoothed, blurred) video content frames to the encoder 108.

The content item analyzer 206 may be configured to analyze each video content frame 102a-n, or any portion of any video content frame 102a-n, to determine various video properties associated with that frame or portion of the frame. The video properties determined by the content item analyzer 206 may comprise, for example, video content type, objective and/or subjective video quality, resolution, frame rate, etc. The content item analyzer 206 may send data indicating the video properties to the pre-filtering unit 204.

The network condition analyzer 208 may be configured to determine information associated with the network (e.g., network 104) and/or the receiver device (receiver device 110). The information determined by the network condition analyzer 208 may comprise data indicating available bandwidth, quality of service (QoS), response time and/or latency, packet loss ratio, rebuffering state and/or time, quality of experience (QoE), etc. The network condition analyzer 208 may send the data to the pre-filtering unit 204.

The neural networks 210a-n may be configured to determine film grain data (e.g., film grain noise, digital film grain, granularity). The neural networks 210a-n may be configured to determine film grain data to be used for modification (e.g., by the receiver device 110) of each input video content frame 102a-n. The neural networks 210a-n may be configured to determine first film grain data to be used for modification of input video content frame 102a, second film grain data to be used for modification of input video content frame 102b, and so on. The film grain data may be indicative of one or more of a film grain intensity, a film grain density, a film grain size, or a film grain color. The neural networks 210a-n may be configured to determine the film grain data based on the video properties determined by the content item analyzer 206 (e.g., video content type, objective and/or subjective video quality, resolution, frame rate, etc.) and/or based on the information determined by the network condition analyzer 208 (e.g., data indicating available bandwidth, quality of service (QoS), response time and/or latency, packet loss ratio, rebuffering state and/or time, quality of experience (QoE), etc.).

The film grain data may comprise film grain parameter data. The film grain parameter data may indicate one or more parameters (e.g., film grain intensity, film grain density, film grain size, film grain color) that may be used (e.g., by the receiver device 110) to generate a film grain. The film grain may comprise a digital representation of optical texture. The film grain may be used for modification (e.g., by the receiver device 110) of a particular input video content frame.

For example, first film grain data (e.g., film grain data to be used for modification of input video content frame 102a) may comprise first film grain parameter data. The first film grain parameter data may be used (e.g., by the receiver device 110) to generate a first film grain. The first film grain may be used for modification (e.g., by the receiver device 110) of the video content frame 102a. Likewise, second film grain data (e.g., film grain data to be used for modification of input video content frame 102b) may comprise second film grain parameter data. The second film grain parameter data may be used (e.g., by the receiver device 110) to generate a second film grain. The second film grain may be used for modification (e.g., by the receiver device 110) of the video content frame 102b, and so on.

Alternatively, the neural networks 210a-n may send (e.g., forward) the film grain data to the film grain modeling unit 212. The film grain modeling unit 212 may receive the film grain data. The film grain modeling unit 212 may determine (e.g., generate) the film grain parameter data based on the received film grain data. The film grain parameter data may be indicative of one or more film grain parameters (e.g., film grain intensity, film grain density, film grain size, film grain color). The one or more film grain parameters that may be used (e.g., by the receiver device 110) to generate a film grain. The film grain may comprise a digital representation of optical texture. The film grain may be used for modification (e.g., by the receiver device 110) of the particular input video content frame.

For example, first film grain data (e.g., film grain data to be used for modification of input video content frame 102a) may be sent to the film grain modeling unit 212. The film grain modeling unit 212 may generate first film grain parameter data based on the first film grain data. The first film grain parameter data may be used to generate (e.g., by the receiver device 110) a first film grain. The first film grain may be used for modification (e.g., by the receiver device 110) of the video content frame 102a. Likewise, second film grain data (e.g., film grain data to be used for modification of input video content frame 102b) may be sent to the film grain modeling unit 212. The film grain modeling unit 212 may generate second film grain parameter data based on the second film grain data. The second film grain parameter data may be used to generate (e.g., by the receiver device 110) a second film grain. The second film grain may be used for modification (e.g., by the receiver device 110) of the video content frame 102b, and so on.

The neural networks 210a-n may determine recommendation data. The recommendation data may indicate recommended film grain parameters to include in the film grain parameter data. The neural networks 210a-n may send the recommendation data to the film grain modeling unit 212. The film grain modeling unit 212 may use the recommendation data to determine the film grain parameter data for each video content frame.

The neural networks 210a-n may determine the recommendation data based on one or more video stream properties and/or video content characteristics or features. For example, the neural networks 210a-n may determine the recommendation data based on one or more of the resolution (e.g., 720p, 1080p, 2160p, etc.) of the video content, the frame rate of the video content (e.g., 24fps, 50 fps, 60 fps, 120 fps, etc.), the objective (or subjective) visual quality of the video content in terms of peak signal-to-noise ratio (PSNR), Structural Similarity Index (SSIM), Video Multimethod Assessment Fusion (VMAF), and/or any combination thereof. The neural networks 210a-n may determine the recommendation data based on one or more of a specific type of the video content (e.g., sport, drama, comedy, news, etc.), an available network bandwidth at any given moment, the cost of the local and/or cloud-based storage of the video content, a network QoS, an estimated perceived QoE, a current response time or network latency, video playback rebuffering, and/or any combination thereof.

Using the recommended film grain parameters to determine the film grain parameter data for each video content frame may ensure that the visual presentation quality (e.g., subjective quality in terms of Mean Opinion Score (MOS)) of the video content frame (e.g., when it is eventually output) is optimized. For example, the recommended film grain parameters may eventually be used (e.g., by the receiver device 110) to generate a film grain that optimizes the visual presentation quality of each video content frame. As such, the visual presentation quality of the video content may be adaptively optimized (e.g., in real-time or offline) using machine learning methods, such as autoregression, classification, supervised/unsupervised learning, support vector machines (SVMs), random forest, or by means of neural network-based methods, such as deep neural networks (DNNs), reinforcement neural networks (where two agents compete each other for achieving a better solution), convolutional neural networks (CNNs), graph neural networks (GNNs), etc.

The neural networks 210a-n may be pre-trained. The neural networks 210a-n may be pre-trained to determine (e.g., output) the film grain data. The neural networks 210a-n may be pre-trained on data associated with other video content items and/or other (e.g., previous) network condition data. The data associated with other video content items may comprise one or more of a video content type, objective and/or subjective video quality, resolution, frame rate, etc. associated with other video content items (e.g., video content items other than video content frames 102a-n). The other network condition data may comprise data indicating previously available bandwidths, previous qualities of service (QoS), previous response times and/or latencies, previous packet loss ratios, previous rebuffering states and/or times, previous qualities of experience (QoE), etc.

The neural networks 210a-n may be configured to dynamically determine bitrates or any network parameters based on current communication network conditions (e.g., as indicated by the network condition analyzer 208) at any given moment in time (e.g., every 1-10 seconds). The neural networks 210a-n may be configured to determine future bitrates substantially in real-time based on at least one already encoded video content frame or any portion of it.

Pre-training the neural networks 210a-n, such as to output the film grain data, may comprise one or more of removing one or more layers of at least one of the neural networks 210a-n, adding one or more layers to at least one of the neural networks 210a-n, adjusting one or more weights associated with one or more neurons of at least one of the neural networks 210a-n, removing one or more neurons from one or more layers of at least one of the neural networks 210a-n, adding one or more neurons to one or more layers of at least one of the neural networks 210a-n, adjusting an activation function associated with at least one of the neural networks 210an, or adjusting a loss function associated with at least one of the neural networks 210a-n.

The neural networks 210a-n may comprise one or more of generative adversarial networks, reinforcement learning, deep neural networks, convolutional neural networks, graph neural networks, machine learning solutions (e.g., support vector machines, random forest, etc.), and/or any combination thereof.

If the neural networks 210a-n comprise a plurality of different types of neural networks, each type of neural network may be configured to perform a different task. For example, a reinforcement learning-based neural network may be configured to maximize QoE, a convolutional neural network may be configured to maximize perceptual visual quality and/or to maintain quality substantially at a constant level, a generative adversarial network may be configured to reduce response time or latency and/or to reduce rebuffering time, and so on. Each neural network structure and its parameters may be dynamically adjusted for each specific task. Thus, the inference stage may be conducted in a dynamic manner. For example, a number of hidden layers, a number of neural network parameters, specific neural network models, neural network loss functions, neural network activation functions, etc. may be dynamically adjusted for achieving an optimal performance as a trade-off of accuracy and computational complexity in terms of processing time for performing a given task or goal.

The pre-processing unit 106 may comprise a neural network selection unit. The neural network selection unit may receive data from the content item analyzer and/or the network condition analyzer 210. The neural network selection unit may be configured to determine and/or select a neural network from the neural networks 204a-n that is the most appropriate (e.g., best) for generating the film grain data to be used for modification (e.g., by the receiver device 110) of a particular video content frame. The neural network selection unit may be configured to determine and/or select a neural network from the neural networks 204a-n that is the most appropriate (e.g., best) neural network for accomplishing a specific pre-defined task (e.g., goal). The pre-defined task may comprise, for example, maintaining visual presentation quality at a constant level based on one or more of the video content type (e.g., sport, news, etc.), the video characteristics (e.g., resolution, frame rate, etc.), or network conditions (e.g., available bandwidth, response time/latency, rebuffering state, etc.).

The neural network selection unit may, for every chunk or segment of each video stream representation, re-select (e.g., redetermine) the best neural network from the neural networks 204a-n for determining optimal encoding parameters at any given moment. The optimal encoding parameters may comprise one or more of bitrates, quantization parameter (QP) values, resolutions, frame rates, etc. Based on (e.g., in response to) the neural network selection unit selecting the best neural network, the structure and parameters of the selected neural network may be dynamically adjusted for achieving an optimal performance as a trade-off of accuracy and computational complexity in terms of processing time for performing the given task or goal. Thus, the structure and parameters of the neural network may be dynamically adjusted based on specific requirements received from the content item analyzer 206 and/or the network condition analyzer 208.

Referring back to FIG. 1, the receiver device 110 may comprise a decoder 112 and a film grain processor 114. The film grain processor 114 may comprise a film grain synthesis unit 116. As described above, the pre-processing unit 106 (e.g., the pre-filtering unit 204) may send each pre-filtered (e.g., smoothed) video content frame to the encoder 108. The encoder 108 may encode each pre-filtered (e.g., smoothed) video content frame. The encoder 108 may transmit the encoded video content frames to the receiver device 110 as a bitstream 109. The receiver device 110 may receive the encoded video content frames. The decoder 112 may decode the encoded video content frames as they are received.

The pre-processing unit 106 (e.g., the neural networks 204a-n and/or the film grain modeling unit 212) may send the film grain parameter data to the receiver device 110. The pre-processing unit 106 may be configured to send the film grain parameter data to the receiver device 110 as parameter data 111. The parameter data 111 may be sent as side information. For example, the parameter data 111 may be sent in the form of one or more Supplemental Enhancement Information (SEI) messages. The SEI message(s) may be inserted into the encoded video content frames during the encoding process. For example, an SEI message indicating the parameter data 111 associated with a first video content frame may be inserted into the encoded first video content frame, an SEI message indicating the parameter data 111 associated with a second video content frame may be inserted into the encoded second video content frame, and so on.

The receiver device 110 may receive the parameter data 111. Based on (e.g., in response to) receiving the parameter data 111, the film grain processor 114 may utilize the film grain parameter data indicated by the parameter data 111 to generate (e.g., determine) film grains. The film grain processor 114 may utilize the film grain parameter data indicated by the parameter data 111 associated with a first video content frame to generate (e.g., determine) a film grain associated with the first video content frame. For example, the film grain processor 114 may utilize the film grain parameter data indicated by the SEI message inserted into the first video content frame to generate (e.g., determine) a film grain associated with the first video content frame. The film grain processor 114 may utilize the film grain parameter data indicated by the parameter data 111 associated with a second video content frame to generate (e.g., determine) a film grain associated with the second video content frame. For example, the film grain processor 114 may utilize the film grain parameter data indicated by the SEI message inserted into the second video content frame to generate (e.g., determine) a film grain associated with the second video content frame, and so on.

The film grains may be used to modify the decoded video content frames. For example, the film grain synthesis unit 116 may modify the decoded video content frames based on the generated film grains. Modifying the decoded video content frames based on the generated film grains may comprise adding each film grain to the corresponding decoded video content frame. For example, modifying the decoded first video content frame may comprise adding the film grain associated with the first video content frame to the decoded first video content frame. Modifying the decoded second video content frame may comprise adding the film grain associated with the second video content frame to the decoded second video content frame, and so on. Modifying the decoded video content frames based on the generated film grains may improve the perceived visual quality of the video content item by efficiently hiding artifacts, including the artifacts caused by the pre-processing (e.g., smoothing) of the video content frames (e.g., by the pre-filtering unit 204).

For example, the receiver device 110 may receive first film grain parameter data (e.g., associated with the video content frame 102a). The receiver device 110 may use the first film grain parameter data to generate a first film grain. The receiver device 110 may use the first film grain to modify (e.g., by the receiver device 110) the decoded video content frame 102a. Modifying the decoded video content frame 102a based on the first film grain may comprise adding the first film grain to the decoded video content frame 102a. The first film grain may be added to at least a portion or region of the decoded video content frame 102a. Modifying the decoded video content frame 102a based on the first film grain may comprise masking (e.g., disguising, concealing, hiding, etc.) artifacts in the decoded video content frame 102a, including the artifacts caused by the pre-processing (e.g., smoothing) of the video content frame 102a.

Likewise, the receiver device 110 may receive second film grain parameter data (e.g., associated with the video content frame 102b). The receiver device 110 may use the second film grain parameter data to generate a second film grain. The receiver device 110 may use the second film grain to modify (e.g., by the receiver device 110) the decoded video content frame 102b. Modifying the decoded video content frame 102b based on the second film grain may comprise adding the second film grain to the decoded video content frame 102b. The second film grain may be added to at least a portion or region of the decoded video content frame 102b. Modifying the decoded video content frame 102b based on the second film grain may comprise masking (e.g., disguising, concealing, hiding, etc.) artifacts in the decoded video content frame 102b, including the artifacts caused by the pre-processing (e.g., smoothing) of the video content frame 102b. The receiver device 110 may cause output 119 of each modified decoded video content frame. The receiver device 110 may repeat this process (e.g., generation of film grain, modification of decoded frame) for each frame of the video content item.

The receiver device 110 may send (e.g., transmit) feedback to the pre-processing unit 106 and/or to the encoder 108. The feedback may be sent to the pre-processing unit 106 in real-time or near real-time. The feedback may be used by the pre-processing unit 106 and/or by the encoder 108 to adaptively determine film grain modeling parameters, to dynamically adjust the structure and/or parameters of one or more of the neural network(s), and/or to adaptively optimize the visual presentation quality of the video content (e.g., using machine learning methods).

The receiver device 110 may be at least one of a set-top box, a streaming video player, a laptop, a television, a smartphone, a tablet, a desktop computer, or any other device capable of presenting content to a user. The user may interact with the network 104 via a user interface associated with the receiver device 110 in order to request a content item from the network 104 and to otherwise interact with the content item. The receiver device 110 may comprise any combination of a hardware element, such as a set-top cable box, or a software element, such as a web browser or other software adapted to playback video. The receiver device 110 may comprise a display for displaying content to a user of the receiver device 110. It is understood that the display may be part of the receiver device 110, such as in the example that the receiver device 110 is a tablet, or may be located externally to the device, such as in the example that the receiver device 110 is a set-top box and the display is a television set connected to the set-top box.

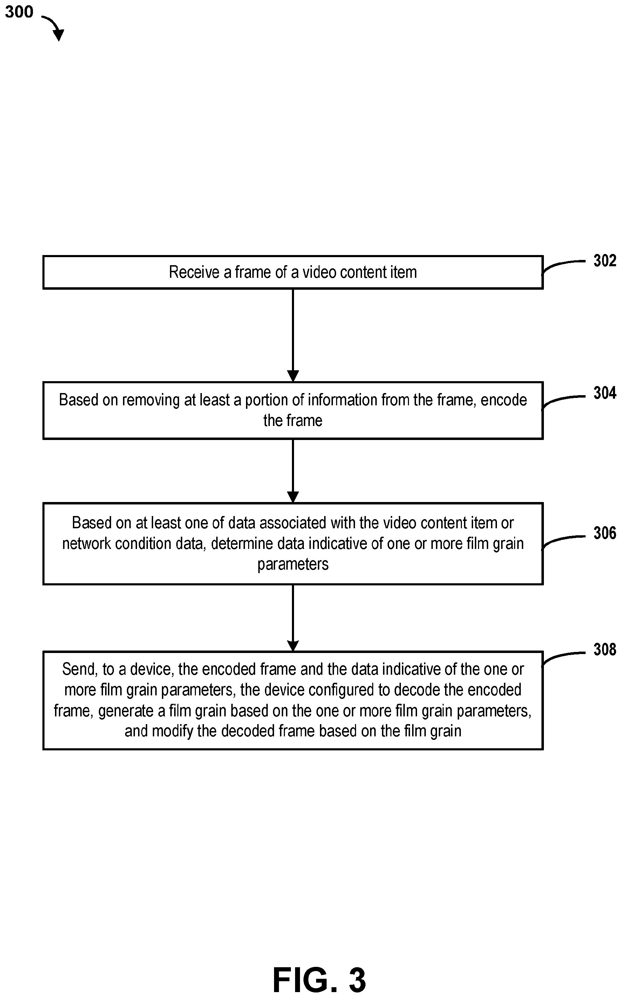

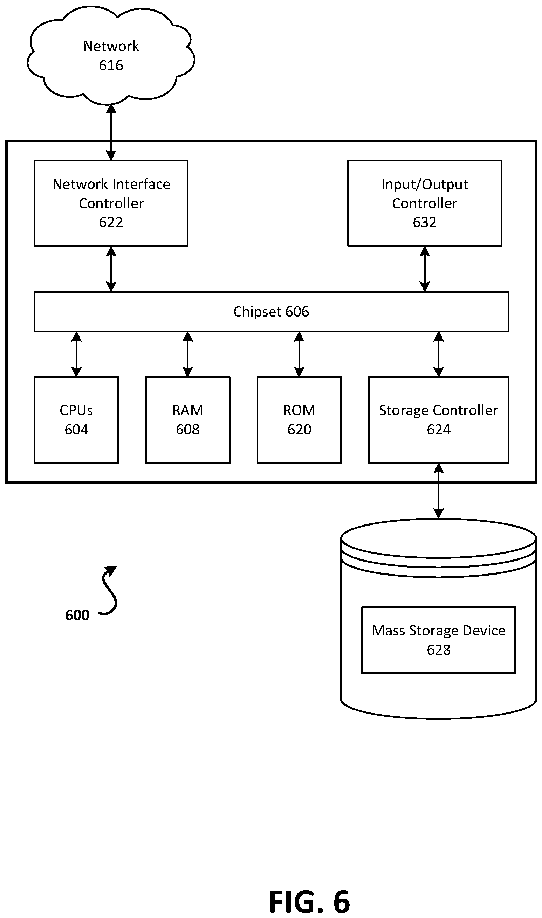

FIG. 3 is a flow diagram illustrating an example method 300. The method 300 may comprise a computer implemented method for masking artifacts. A system and/or computing environment, such as the system 100 of FIG. 1 and/or the computing environment of FIG. 6, may be configured to perform the method 300. For example, the pre-processing unit 106 and/or the encoder 108 of FIG. 1 may be configured to perform the method 300.

At 302, a frame of a video content item may be received. The video content item may comprise a high-resolution video content item. The video content item may comprise one or more of linear content, non-linear content, video content, audio content, multi-media content, recorded content, stored content, or any other form of content a user may wish to consume. Video content may refer generally to any video content produced for viewer consumption regardless of the type, format, genre, or delivery method. Video content may comprise video content produced for broadcast via over-the-air radio, cable, satellite, or the internet. Video content may comprise digital video content produced for digital video streaming or video-on-demand. Video content may comprise a movie, a television show or program, an episodic or serial television series, or a documentary series, such as a nature documentary series. The video content item may comprise any other type of content a user may wish to consume.

At 304, the frame may be encoded. The frame may be encoded based on (e.g., in response to, after) removing at least a portion of information, such as high-frequency spatial information, from the frame. Removing the at least the portion of the information, such as high-frequency spatial information, from the frame comprises may comprise applying a Gaussian filter to the frame. Removing the at least the portion of the information from the frame may comprise smoothing the frame. The information may comprise one or more regions of the frame that change rapidly from one color to another. For example, the information may comprise one or more regions of the frame that contain sharp edges. The information may comprise perceptually unnoticeable details (e.g., the movement of tree leaves, the movement of grass, and/or the like) in the frame.

At 306, data indicative of one or more film grain parameters may be determined. The one or more film grain parameters may comprise at least one of film grain intensity, film grain density, film grain size, or film grain color. The data may be determined based on at least one of data associated with the video content item or network condition data. The data associated with the video content item may comprise data indicating at least one of a content type associated with the video content item, a quality associated with the video content item, a resolution associated with the video content item, or a frame rate associated with the video content item. The network condition data may comprise data indicating one or more of available bandwidth, quality of service, latency, packet loss ratio, rebuffering state, or quality of experience.

Determining the data indicative of the one or more film grain parameters may comprise determining film grain data using one or more neural networks. Determining the data indicative of the one or more film grain parameters may comprise selecting the one or more neural networks from a plurality of neural networks pre-trained to output film grain data. The one or more neural networks may be selected based on at least one of the data associated with the video content item or the network condition data.

The plurality of neural networks may be pre-trained on data associated with other video content items and/or other network condition data. The plurality of neural networks may be pre-trained to output the film grain data. Pre-training the plurality of neural networks to output the film grain data may comprise at least one of removing one or more layers of at least one of the plurality of neural networks, adding one or more layers to at least one of the plurality of neural networks, adjusting one or more weights associated with one or more neurons of at least one of the plurality of neural networks, removing one or more neurons from one or more layers of at least one of the plurality of neural networks, adding one or more neurons to one or more layers of at least one of the plurality of neural networks, adjusting an activation function associated with at least one of the plurality of neural networks, or adjusting a loss function associated with at least one of the plurality of neural networks.

The film grain data may comprise the data indicative of the one or more film grain parameters. Alternatively, determining the data indicative of the one or more film grain parameters may further comprise generating the data indicative of the one or more film grain parameters based on the film grain data.

At 308, the encoded frame and the data indicative of the one or more film grain parameters may be sent to a device. The device may be configured to decode the encoded frame. The device may be configured to generate a film grain based on the one or more film grain parameters. The film grain may comprise a digital representation of optical texture. The device may be configured to modify the decoded frame based on the film grain. If removing the at least the portion of the information from the frame comprises smoothing the frame, modifying the decoded frame based on the film grain may comprise masking at least a portion of artifacts in the frame, including the artifacts caused by the smoothing. Modifying the decoded frame based on the film grain may comprise adding the film grain to the decoded frame to mask any artifacts in the frame (including those artifacts caused by the pre-processing (e.g., smoothing) process), therefore improving the perceived visual quality of the video content. This process may be repeated for each remaining frame of the video content item.

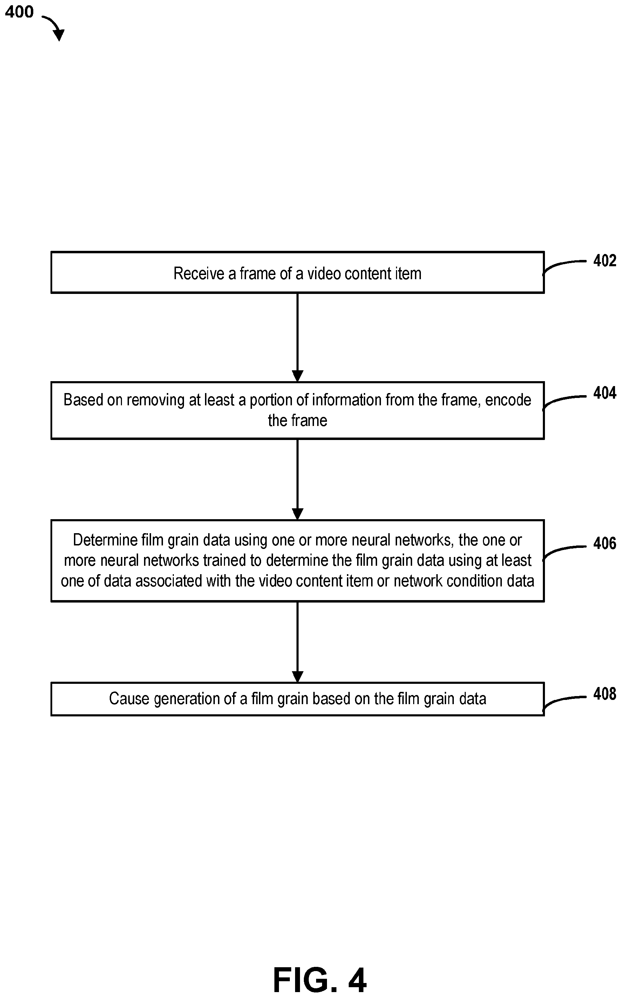

FIG. 4 is a flow diagram illustrating an example method 400. The method 400 may comprise a computer implemented method for masking artifacts. A system and/or computing environment, such as the system 100 of FIG. 1 and/or the computing environment of FIG. 6, may be configured to perform the method 400. For example, the pre-processing unit 106 and/or the encoder 108 of FIG. 1 may be configured to perform the method 400.

At 402, a frame of a video content item may be received. The video content item may comprise a high-resolution video content item. The video content item may comprise one or more of linear content, non-linear content, video content, audio content, multi-media content, recorded content, stored content, or any other form of content a user may wish to consume. Video content may refer generally to any video content produced for viewer consumption regardless of the type, format, genre, or delivery method. Video content may comprise video content produced for broadcast via over-the-air radio, cable, satellite, or the internet. Video content may comprise digital video content produced for digital video streaming or video-on-demand. Video content may comprise a movie, a television show or program, an episodic or serial television series, or a documentary series, such as a nature documentary series. The video content item may comprise any other type of content a user may wish to consume.

At 404, the frame may be encoded. The frame may be encoded based on (e.g., in response to, after) removing at least a portion of information, such as high-frequency spatial information, from the frame. Removing the at least the portion of the information from the frame comprises may comprise applying a Gaussian filter to the frame. Removing the at least the portion of the information from the frame may comprise smoothing the frame. The information may comprise one or more regions of the frame that change rapidly from one color to another. For example, the information may comprise one or more regions of the frame that contain sharp edges. The information may comprise perceptually unnoticeable details (e.g., the movement of tree leaves, the movement of grass, and/or the like) in the frame.

At 406, film grain data may be determined. The film grain may be determined using one or more neural networks. The one or more neural networks may be trained to determine the film grain data using at least one of data associated with the video content item or network condition data. The data associated with the video content item may comprise data indicating at least one of a content type associated with the video content item, a quality associated with the video content item, a resolution associated with the video content item, or a frame rate associated with the video content item. The network condition data may comprise data indicating one or more of available bandwidth, quality of service, latency, packet loss ratio, rebuffering state, or quality of experience. Determining the film grain data using the one or more neural networks may comprise selecting the one or more neural networks from a plurality of neural networks pre-trained to output film grain data. The one or more neural networks may be selected based on at least one of the data associated with the video content item or the network condition data.

The plurality of neural networks may be pre-trained on data associated with other video content items and/or other network condition data. The plurality of neural networks may be pre-trained to output the film grain data. Pre-training the plurality of neural networks to output the film grain data may comprise at least one of removing one or more layers of at least one of the plurality of neural networks, adding one or more layers to at least one of the plurality of neural networks, adjusting one or more weights associated with one or more neurons of at least one of the plurality of neural networks, removing one or more neurons from one or more layers of at least one of the plurality of neural networks, adding one or more neurons to one or more layers of at least one of the plurality of neural networks, adjusting an activation function associated with at least one of the plurality of neural networks, or adjusting a loss function associated with at least one of the plurality of neural networks.

The film grain data may comprise data indicative of the one or more film grain parameters. The one or more film grain parameters may comprise at least one of film grain intensity, film grain density, film grain size, or film grain color. Alternatively, the data indicative of the one or more film grain parameters may be determined based on the film grain data.

At 408, generation of a film grain may be caused. The film grain may comprise a digital representation of optical texture. The generation of the film grain may be caused based on the film grain data. For example, the generation of the film grain may be caused based on the one or more film grain parameters. Generation of a film grain may be caused by sending the data indicative of the one or more film grain parameters to a device (e.g., receiver device). The device may decode the encoded frame. The device may modify the decoded frame based on the film grain. If removing the at least the portion of the information from the frame comprises smoothing the frame, modifying the decoded frame based on the film grain may comprise masking at least a portion of artifacts in the frame, including the artifacts caused by the smoothing. Modifying the decoded frame based on the film grain may comprise adding the film grain to the decoded frame to mask any artifacts in the frame (including those artifacts caused by the pre-processing (e.g., smoothing) process), therefore improving the perceived visual quality of the video content. This process may be repeated for each remaining frame of the video content item.

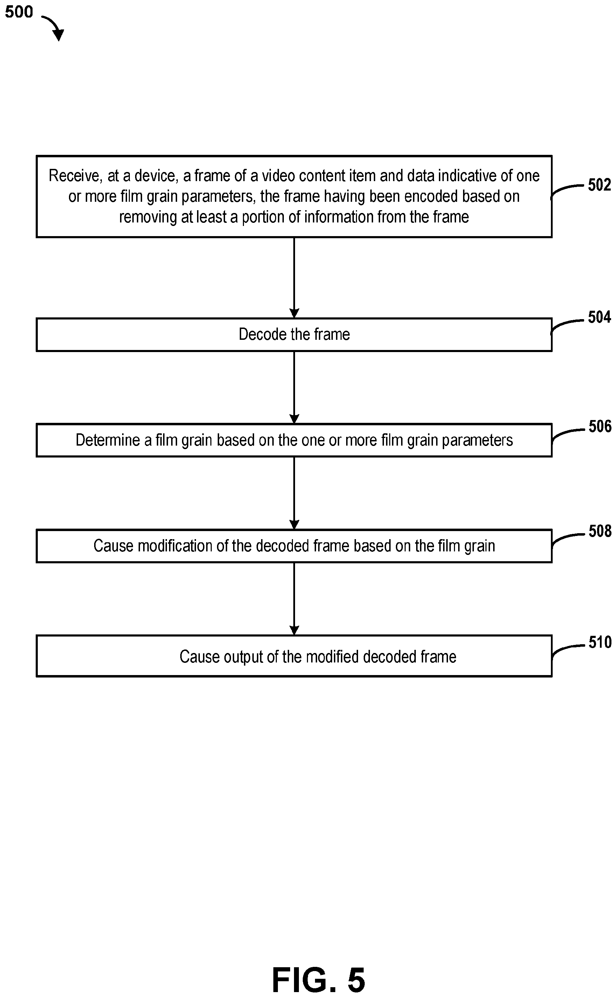

FIG. 5 is a flow diagram illustrating an example method 500. The method 500 may comprise a computer implemented method for masking artifacts. A system and/or computing environment, such as the system 100 of FIG. 1 and/or the computing environment of FIG. 6, may be configured to perform the method 500. For example, the receiver device 110 of FIG. 1 may be configured to perform the method 500.

At 502, a frame of a video content item may be received. The frame of the video content item may be received at a device. Data indicative of one or more film grain parameters may be received. The data indicative of the one or more film grain parameters may be received at the device. The one or more film grain parameters may comprise at least one of film grain intensity, film grain density, film grain size, or film grain color.

The frame may have previously been encoded. The frame may have been encoded based on (e.g., in response to, after) removing at least a portion of information, such as high-frequency spatial information, from the frame. Removing the at least the portion of the information from the frame comprises may comprise applying a Gaussian filter to the frame. Removing the at least the portion of the information from the frame may comprise smoothing the frame. The information may comprise one or more regions of the frame that change rapidly from one color to another. For example, the information may comprise one or more regions of the frame that contain sharp edges. The information may comprise perceptually unnoticeable details (e.g., the movement of tree leaves, the movement of grass, and/or the like) in the frame. At 504, the frame may be decoded.

At 506, a film grain may be determined. The film grain may comprise a digital representation of optical texture. The film grain may be determined based on the one or more film grain parameters. At 508, modification of the decoded frame may be caused. Modification of the decoded frame may be caused based on the film grain. If removing the at least the portion of the information from the frame comprises smoothing the frame, modifying the decoded frame based on the film grain may comprise masking at least a portion of artifacts in the frame, including the artifacts caused by the smoothing. Modifying the decoded frame based on the film grain may comprise adding the film grain to the decoded frame to mask any artifacts in the frame (including those artifacts caused by the pre-processing (e.g., smoothing) process), therefore improving the perceived visual quality of the video content. This process may be repeated for each remaining frame of the video content item. At 510, output (e.g., playback, display) of the modified decoded frame may be caused. For example, output of the modified decoded frame having an improved visual quality may be caused. This process may be repeated for each remaining frame of the video content item

FIG. 6 depicts a computing device that may be used in various aspects, such as one or more of the network 104, the pre-processing unit 106, the encoder 108, the receiver device 110, the decoder 112, the film grain processor 114, and/or the film grain synthesis unit 116 depicted in FIG. 1 and/or one or more of the film grain modeling unit 212, the neural networks 210a-n, the pre-filtering unit 204, the content item analyzer 206, and/or the network condition analyzer 208 of FIG. 2. With regard to the example architecture of FIGS. 1-2, any of the devices, networks, processors, units, and/or other components may each be implemented in an instance of a computing device 600 of FIG. 6.

The computer architecture shown in FIG. 6 shows a conventional server computer, workstation, desktop computer, laptop, tablet, network appliance, PDA, e-reader, digital cellular phone, or other computing node, and may be utilized to execute any aspects of the computers described herein, such as to implement the methods described in relation to FIG. 3, FIG. 4, and FIG. 5.

The computing device 600 may include a baseboard, or "motherboard," which is a printed circuit board to which a multitude of components or devices may be connected by way of a system bus or other electrical communication paths. One or more central processing units (CPUs) 604 may operate in conjunction with a chipset 606. The CPU(s) 604 may be standard programmable processors that perform arithmetic and logical operations necessary for the operation of the computing device 600.

The CPU(s) 604 may perform the necessary operations by transitioning from one discrete physical state to the next through the manipulation of switching elements that differentiate between and change these states. Switching elements may generally include electronic circuits that maintain one of two binary states, such as flip-flops, and electronic circuits that provide an output state based on the logical combination of the states of one or more other switching elements, such as logic gates. These basic switching elements may be combined to create more complex logic circuits including registers, adders-subtractors, arithmetic logic units, floating-point units, and the like.

The CPU(s) 604 may be augmented with or replaced by other processing units, such as GPU(s). The GPU(s) may comprise processing units specialized for but not necessarily limited to highly parallel computations, such as graphics and other visualization-related processing.

A chipset 606 may provide an interface between the CPU(s) 604 and the remainder of the components and devices on the baseboard. The chipset 606 may provide an interface to a random access memory (RAM) 608 used as the main memory in the computing device 600. The chipset 606 may further provide an interface to a computer-readable storage medium, such as a read-only memory (ROM) 620 or non-volatile RAM (NVRAM) (not shown), for storing basic routines that may help to start up the computing device 600 and to transfer information between the various components and devices. ROM 620 or NVRAM may also store other software components necessary for the operation of the computing device 600 in accordance with the aspects described herein.

The computing device 600 may operate in a networked environment using logical connections to remote computing nodes and computer systems through local area network (LAN) 616. The chipset 606 may include functionality for providing network connectivity through a network interface controller (NIC) 622, such as a gigabit Ethernet adapter. A NIC 622 may be capable of connecting the computing device 600 to other computing nodes over a network 616. It should be appreciated that multiple NICs 622 may be present in the computing device 600, connecting the computing device to other types of networks and remote computer systems.

The computing device 600 may be connected to a mass storage device 628 that provides non-volatile storage for the computer. The mass storage device 628 may store system programs, application programs, other program modules, and data, which have been described in greater detail herein. The mass storage device 628 may be connected to the computing device 600 through a storage controller 624 connected to the chipset 606. The mass storage device 628 may consist of one or more physical storage units. A storage controller 624 may interface with the physical storage units through a serial attached SCSI (SAS) interface, a serial advanced technology attachment (SATA) interface, a fiber channel (FC) interface, or other type of interface for physically connecting and transferring data between computers and physical storage units.

The computing device 600 may store data on a mass storage device 628 by transforming the physical state of the physical storage units to reflect the information being stored. The specific transformation of a physical state may depend on various factors and on different implementations of this description. Examples of such factors may include, but are not limited to, the technology used to implement the physical storage units and whether the mass storage device 628 is characterized as primary or secondary storage and the like.

For example, the computing device 600 may store information to the mass storage device 628 by issuing instructions through a storage controller 624 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit. Other transformations of physical media are possible without departing from the scope and spirit of the present description, with the foregoing examples provided only to facilitate this description. The computing device 600 may further read information from the mass storage device 628 by detecting the physical states or characteristics of one or more particular locations within the physical storage units.

In addition to the mass storage device 628 described above, the computing device 600 may have access to other computer-readable storage media to store and retrieve information, such as program modules, data structures, or other data. It should be appreciated by those skilled in the art that computer-readable storage media may be any available media that provides for the storage of non-transitory data and that may be accessed by the computing device 600.

By way of example and not limitation, computer-readable storage media may include volatile and non-volatile, transitory computer-readable storage media and non-transitory computer-readable storage media, and removable and non-removable media implemented in any method or technology. Computer-readable storage media includes, but is not limited to, RAM, ROM, erasable programmable ROM ("EPROM"), electrically erasable programmable ROM ("EEPROM"), flash memory or other solid-state memory technology, compact disc ROM ("CD-ROM"), digital versatile disk ("DVD"), high definition DVD ("HD-DVD"), BLU-RAY, or other optical storage, magnetic citemtes, magnetic tape, magnetic disk storage, other magnetic storage devices, or any other medium that may be used to store the desired information in a non-transitory fashion.

A mass storage device, such as the mass storage device 628 depicted in FIG. 6, may store an operating system utilized to control the operation of the computing device 600. The operating system may comprise a version of the LINUX operating system. The operating system may comprise a version of the WINDOWS SERVER operating system from the MICROSOFT Corporation. According to further aspects, the operating system may comprise a version of the UNIX operating system. Various mobile phone operating systems, such as IOS and ANDROID, may also be utilized. It should be appreciated that other operating systems may also be utilized. The mass storage device 628 may store other system or application programs and data utilized by the computing device 600.

The mass storage device 628 or other computer-readable storage media may also be encoded with computer-executable instructions, which, when loaded into the computing device 600, transforms the computing device from a general-purpose computing system into a special-purpose computer capable of implementing the aspects described herein. These computer-executable instructions transform the computing device 600 by specifying how the CPU(s) 604 transition between states, as described above. The computing device 600 may have access to computer-readable storage media storing computer-executable instructions, which, when executed by the computing device 600, may perform the methods described in relation to FIG. 3, FIG. 4, and FIG. 5.

A computing device, such as the computing device 600 depicted in FIG. 6, may also include an input/output controller 632 for receiving and processing input from a number of input devices, such as a keyboard, a mouse, a touchpad, a touch screen, an electronic stylus, or other type of input device. Similarly, an input/output controller 632 may provide output to a display, such as a computer monitor, a flat-panel display, a digital projector, a printer, a plotter, or other type of output device. It will be appreciated that the computing device 600 may not include all of the components shown in FIG. 6, may include other components that are not explicitly shown in FIG. 6, or may utilize an architecture completely different than that shown in FIG. 6.

As described herein, a computing device may be a physical computing device, such as the computing device 600 of FIG. 6. A computing node may also include a virtual machine host process and one or more virtual machine instances. Computer-executable instructions may be executed by the physical hardware of a computing device indirectly through interpretation and/or execution of instructions stored and executed in the context of a virtual machine.

It is to be understood that the methods and systems are not limited to specific methods, specific components, or to particular implementations. It is also to be understood that the terminology used herein is for the purpose of describing particular embodiments only and is not intended to be limiting.

As used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other components, integers or steps. "Exemplary" means "an example of' and is not intended to convey an indication of a preferred or ideal embodiment. "Such as" is not used in a restrictive sense, but for explanatory purposes.

Components are described that may be used to perform the described methods and systems. When combinations, subsets, interactions, groups, etc., of these components are described, it is understood that while specific references to each of the various individual and collective combinations and permutations of these may not be explicitly described, each is specifically contemplated and described herein, for all methods and systems. This applies to all aspects of this application including, but not limited to, operations in described methods. Thus, if there are a variety of additional operations that may be performed it is understood that each of these additional operations may be performed with any specific embodiment or combination of embodiments of the described methods.

As will be appreciated by one skilled in the art, the methods and systems may take the form of an entirely hardware embodiment, an entirely software embodiment, or an embodiment combining software and hardware aspects. Furthermore, the methods and systems may take the form of a computer program product on a computer-readable storage medium having computer-readable program instructions (e.g., computer software) embodied in the storage medium. More particularly, the present methods and systems may take the form of web-implemented computer software. Any suitable computer-readable storage medium may be utilized including hard disks, CD-ROMs, optical storage devices, or magnetic storage devices.

Embodiments of the methods and systems are described herein with reference to block diagrams and flowchart illustrations of methods, systems, apparatuses and computer program products. It will be understood that each block of the block diagrams and flowchart illustrations, and combinations of blocks in the block diagrams and flowchart illustrations, respectively, may be implemented by computer program instructions. These computer program instructions may be loaded on a general-purpose computer, special-purpose computer, or other programmable data processing apparatus to produce a machine, such that the instructions which execute on the computer or other programmable data processing apparatus create a means for implementing the functions specified in the flowchart block or blocks.

These computer program instructions may also be stored in a computer-readable memory that may direct a computer or other programmable data processing apparatus to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

The various features and processes described above may be used independently of one another, or may be combined in various ways. All possible combinations and subcombinations are intended to fall within the scope of this disclosure. In addition, certain methods or process blocks may be omitted in some implementations. The methods and processes described herein are also not limited to any particular sequence, and the blocks or states relating thereto may be performed in other sequences that are appropriate. For example, described blocks or states may be performed in an order other than that specifically described, or multiple blocks or states may be combined in a single block or state. The example blocks or states may be performed in serial, in parallel, or in some other manner. Blocks or states may be added to or removed from the described example embodiments. The example systems and components described herein may be configured differently than described. For example, elements may be added to, removed from, or rearranged compared to the described example embodiments.

It will also be appreciated that various items are illustrated as being stored in memory or on storage while being used, and that these items or portions thereof may be transferred between memory and other storage devices for purposes of memory management and data integrity. Alternatively, or in addition, some or all of the software modules and/or systems may execute in memory on another device and communicate with the illustrated computing systems via inter-computer communication. Furthermore, in some embodiments, some or all of the systems and/or modules may be implemented or provided in other ways, such as at least partially in firmware and/or hardware, including, but not limited to, one or more application-specific integrated circuits ("ASICs"), standard integrated circuits, controllers (e.g., by executing appropriate instructions, and including microcontrollers and/or embedded controllers), field-programmable gate arrays ("FPGAs"), complex programmable logic devices ("CPLDs"), etc. Some or all of the modules, systems, and data structures may also be stored (e.g., as software instructions or structured data) on a computer-readable medium, such as a hard disk, a memory, a network, or a portable media article to be read by an appropriate device or via an appropriate connection. The systems, modules, and data structures may also be transmitted as generated data signals (e.g., as part of a carrier wave or other analog or digital propagated signal) on a variety of computer-readable transmission media, including wireless-based and wired/cable-based media, and may take a variety of forms (e.g., as part of a single or multiplexed analog signal, or as multiple discrete digital packets or frames). Such computer program products may also take other forms in other embodiments. Accordingly, the present invention may be practiced with other computer system configurations.

While the methods and systems have been described in connection with preferred embodiments and specific examples, it is not intended that the scope be limited to the particular embodiments set forth, as the embodiments herein are intended in all respects to be illustrative rather than restrictive.

Here follows a list of clauses highlighting aspects of the disclosure.

Clause 1: A method comprising:
receiving a frame of a video content item;
based on removing at least a portion of high-frequency spatial information from the frame, encoding the frame;
based on at least one of data associated with the video content item or network condition data, determining data indicative of one or more film grain parameters; and
sending, to a device, the encoded frame and the data indicative of the one or more film grain parameters, wherein the device is configured to decode the encoded frame, generate a film grain based on the one or more film grain parameters, and modify the decoded frame based on the film grain.

Clause 2: The method of claim 1, wherein removing the at least the portion of high-frequency spatial information from the frame comprises applying a Gaussian filter to the frame.

Clause 3: The method of claim 1, wherein removing the at least the portion of high-frequency spatial information from the frame comprises smoothing the frame, and wherein modifying the decoded frame based on the film grain comprises masking at least a portion of artifacts caused by the smoothing.

Clause 4: The method of claim 1, wherein determining the data indicative of the one or more film grain parameters comprises:
determining film grain data using one or more neural networks, wherein the one or more neural networks are pre-trained on at least one of data associated with other video content items or other network condition data.

Clause 5: The method of claim 4, wherein the film grain data comprises the data indicative of the one or more film grain parameters, or wherein determining the data indicative of the one or more film grain parameters comprises generating the data indicative of the one or more film grain parameters based on the film grain data.

Clause 6: The method of claim 1, wherein determining the data indicative of the one or more film grain parameters comprises:
selecting, based on at least one of the data associated with the video content item or the network condition data, one or more neural networks from a plurality of neural networks pre-trained to output film grain data.

Clause 7: The method of claim 6, the method further comprising pre-training the plurality of neural networks to output the film grain data, wherein pre-training the plurality of neural networks comprises at least one of:
removing one or more layers of at least one of the plurality of neural networks;
adding one or more layers to at least one of the plurality of neural networks;
adjusting one or more weights associated with one or more neurons of at least one of the plurality of neural networks;
removing one or more neurons from one or more layers of at least one of the plurality of neural networks;
adding one or more neurons to one or more layers of at least one of the plurality of neural networks;
adjusting an activation function associated with at least one of the plurality of neural networks; or
adjusting a loss function associated with at least one of the plurality of neural networks.

Clause 8: The method of claim 1, wherein the data associated with the video content item comprises data indicating at least one of a content type associated with the video content item, a quality associated with the video content item, a resolution associated with the video content item, or a frame rate associated with the video content item.

Clause 9: The method of claim 1, wherein the network condition data comprises data indicating one or more of available bandwidth, quality of service, latency, packet loss ratio, rebuffering state, or quality of experience.

Clause 10: The method of claim 1, wherein the film grain comprises a digital representation of optical texture.

Clause 11: The method of claim 1, wherein the one or more film grain parameters comprise one or more of film grain intensity, film grain density, film grain size, or film grain color.

Clause 12: A method comprising:
receiving a frame of a video content item;
based on removing at least a portion of high-frequency spatial information from the frame, encoding the frame;
determining film grain data using one or more neural networks, wherein the one or more neural networks are trained to determine the film grain data using at least one of data associated with the video content item or network condition data; and
causing generation of a film grain based on the film grain data, wherein the frame is decoded, and wherein the decoded frame is modified based on the film grain.

Clause 13: The method of claim 12, further comprising:
determining data indicative of one or more film grain parameters based on the film grain data, and wherein causing generation of the film grain comprises:
sending, to the device, the encoded frame and the data indicative of the one or more film grain parameters, wherein the device is configured to decode the encoded frame and modify the decoded frame based on the film grain, and wherein the film grain is generated by the device based on the one or more film grain parameters.

Clause 14: The method of claim 12, wherein removing the at least the portion of high-frequency spatial information from the frame comprises smoothing the frame, and wherein the decoded frame is modified to mask at least a portion of artifacts caused by the smoothing.

Clause 15: The method of claim 12, wherein the film grain comprises a digital representation of optical texture.

Clause 16: The method of claim 12, wherein the film grain data is indicative of one or more film grain parameters, wherein the one or more film grain parameters comprise one or more of film grain intensity, film grain density, film grain size, or film grain color.

Clause 17: A method comprising:
receiving, at a device, a frame of a video content item and data indicative of one or more film grain parameters, wherein the frame has been encoded based on removing at least a portion of high-frequency spatial information from the frame;
decoding the frame;
determining a film grain based on the one or more film grain parameters;
causing modification of the decoded frame based on the film grain; and
causing output of the modified decoded frame.

Clause 18: The method of claim 17, wherein removing the at least the portion of high-frequency spatial information from the frame comprises smoothing the frame, and wherein causing modification of the decoded frame based on the film grain comprises masking at least a portion of artifacts caused by the smoothing.

Clause 19: The method of claim 17, wherein the film grain comprises a digital representation of optical texture.

Clause 20: The method of claim 17, wherein the one or more film grain parameters comprise one or more of film grain intensity, film grain density, film grain size, or film grain color.

It will be apparent to those skilled in the art that various modifications and variations may be made without departing from the scope or spirit of the present disclosure. Other embodiments will be apparent to those skilled in the art from consideration of the specification and practices described herein. It is intended that the specification and example figures be considered as exemplary only, with a true scope and spirit being indicated by the following claims.

## Claims

1. A method comprising:
receiving a frame of a video content item;
based on removing at least a portion of high-frequency spatial information from the frame, encoding the frame;
based on at least one of data associated with the video content item or network condition data, determining data indicative of one or more film grain parameters; and
sending, to a device, the encoded frame and the data indicative of the one or more film grain parameters, wherein the device is configured to decode the encoded frame, generate a film grain based on the one or more film grain parameters, and modify the decoded frame based on the film grain.

2. The method of claim 1, wherein removing the at least the portion of high-frequency spatial information from the frame comprises applying a Gaussian filter to the frame.

3. The method of any one of claims 1-2, wherein removing the at least the portion of high-frequency spatial information from the frame comprises smoothing the frame, and wherein modifying the decoded frame based on the film grain comprises masking at least a portion of artifacts caused by the smoothing.

4. The method of any one of claims 1-3, wherein determining the data indicative of the one or more film grain parameters comprises:
determining film grain data using one or more neural networks, wherein the one or more neural networks are pre-trained on at least one of data associated with other video content items or other network condition data.

5. The method of claim 4, wherein the film grain data comprises the data indicative of the one or more film grain parameters, or wherein determining the data indicative of the one or more film grain parameters comprises generating the data indicative of the one or more film grain parameters based on the film grain data.

6. The method of any one of claims 1-5, wherein determining the data indicative of the one or more film grain parameters comprises:
selecting, based on at least one of the data associated with the video content item or the network condition data, one or more neural networks from a plurality of neural networks pre-trained to output film grain data.

7. The method of claim 6, the method further comprising pre-training the plurality of neural networks to output the film grain data, wherein pre-training the plurality of neural networks comprises at least one of:
removing one or more layers of at least one of the plurality of neural networks;
adding one or more layers to at least one of the plurality of neural networks;
adjusting one or more weights associated with one or more neurons of at least one of the plurality of neural networks;
removing one or more neurons from one or more layers of at least one of the plurality of neural networks;
adding one or more neurons to one or more layers of at least one of the plurality of neural networks;
adjusting an activation function associated with at least one of the plurality of neural networks; or
adjusting a loss function associated with at least one of the plurality of neural networks.

8. The method of any one of claims 1-7, wherein the data associated with the video content item comprises data indicating at least one of a content type associated with the video content item or a quality associated with the video content item.

9. The method of any one of claims 1-8, wherein the data associated with the video content item comprises at least one of data indicating a resolution associated with the video content item or a frame rate associated with the video content item.

10. The method of any one of claim 1-9, wherein the network condition data comprises data indicating one or more of available bandwidth, quality of service, latency, packet loss ratio, rebuffering state, or quality of experience.

11. The method of any one of claims 1-10, wherein the film grain comprises a digital representation of optical texture.

12. The method of any one of claims 1-11, wherein the one or more film grain parameters comprise one or more of film grain intensity, film grain density, film grain size, or film grain color.

13. A computing device comprising:
one or more processors; and
memory storing instructions that, when executed by the one or more processors, cause the computing device to perform the method of any one of claims 1-12.

14. A computer-readable medium storing instructions that, when executed, cause the method of any one of claims 1-12 to be performed.

15. A system comprising:
at least one network device configured to perform the method of any one of claims 1-12; and
the device configured to receive, from the at least one network device, the encoded frame and the data indicative of the one or more film grain parameters.
